# EUROPÄISCHE PATENTANMELDUNG

(11) **EP 0 930 001 A1**
(43) Veröffentlichungstag der Anmeldung: **21.07.1999**
(21) Anmeldenummer: 99100791.5
(22) Anmeldetag: 18.01.1999
(51) Int. Cl.: A01D 25/04

(54) **Vorrichtung zum Roden von Wurzelfrüchten, insbesondere Zuckerrüben**

(30) Priorität: 19.01.1998 DE 19814823
(71) Anmelder: Holmer, Alfons, 84069 Eggmühl (DE)
(72) Erfinder: Holmer, Alfons, 84069 Eggmühl (DE)
(74) Vertreter: Wasmeier, Alfons, Dipl.-Ing.

(57) **Zusammenfassung**

Eine Vorrichtung zum Roden von Wurzelfrüchten weist einen Antrieb mit einer angetriebenen Welle und einer auf der Welle angeordneten Exzentereinheit zur Erzeugung einer oszillierenden Bewegung der Rodeschare auf. Hierbei wird jeder einzelne Scharhalter auf einer gemeinsamen Welle linear verschoben und in eine oszillierende Bewegung versetzt.

## Beschreibung

Die Erfindung betrifft eine Vorrichtung nach dem Oberbegriff des Anspruches 1.

Bei Gleichlaufrodern wird die Rübe mittels Rodescharen aus der Erde gepflügt. Dabei wird eine erhebliche Menge an Erdreich bewegt, das zumindest teilweise an den Rüben haftet, so daß der Erdanteil beim Anliefern der Rüben problematisch ist. Soweit beim Ernten die Rüben in der Erde gedreht werden, muß ein Wurzelbruch in Kauf genommen werden.

Des weiteren sind gegenläufige Rübenschare bekannt, die Relativbewegungen nach vorne und hinten ausführen. Scharhalter bekannter Art sind auf einer gemeinsamen Welle oder auf axial aufeinander ausgerichteten oder achsparallelen Wellenabschnitten angeordnet. Sie haben eine relativ breite Bauweise und entsprechend hohen Verschleiß am Schar. Die Verbindung zwischen Scharhalter und Schar ist in der Regel starr.

Zum Ausheben der Rüben aus dem Erdreich werden Rodewerkzeuge in Form von Rodescharen verwendet, bei denen Scharbrust und Scharbleche eine Einheit bilden und die Scharbleche bei Verschleiß ausgewechselt werden.

Rodevorrichtungen dieser Art (DE-OS 20 41 595 und 29 37 544) weisen Fingerräder oder Hubräder mit Nabe und Fingerstern aus Gummi auf. Die Standzeit derartiger Vorrichtungen, insbesondere der Gummifinger, ist jedoch extrem gering und die Rübenklemmung nicht ausreichend. Desweiteren ist der Schmutzabbau nicht zufriedenstellend.

Des weiteren ist aus der DE-GM 83 34 718 ein Fingerrad mit elastischen und steifen Mitnehmerfingern bekannt, was eine aufwendige Konstruktion darstellt, zu einer erheblichen Materialbeanspruchung und zu einem vorzeitigen Verschleiß führt.

Schließlich ist aus der PCT/WO 96/24241 eine Rodevorrichtung für Zuckerrüben bekannt, bei der dem Rodewerkzeug jeweils ein Fingerrad-Paar zugeordnet ist, dessen Finger als Stahlzinken ausgebildet sind, die in einem elastischen Lagerring gelagert sind. Hierbei soll eine sehr gute Selbstreinigung des Fingerradpaares und eine einwandfreie Rübenklemmung ermöglicht werden, wobei die Rodearbeit verlustarm und die Erdabscheidung intensiv sein soll. Bei extrem schwierigen Bodenverhältnissen stellt sich jedoch heraus, daß die Reinigungswirkung auf die gerodeten Rüben und die in Verbindung damit erforderliche Säuberung der Rüben nicht zufriedenstellend ist, und daß für das Abführen der Rüben gesonderte Fördervorrichtungen unmittelbar im Anschluß an die Fingerräder erforderlich sind. Des weiteren wird die Klemmung der Rüben bei großem Erdanteil und Erde mit extrem hohem Feuchtigkeitsgehalt problematisch.

Aufgabe der Erfindung ist, die Lagerung von Scharkörpern bei Rübenerntemaschinen so zu gestalten, daß die Standzeit der Rodeschare erhöht wird, daß ein effektiveres Roden erreicht wird, daß die Rodeschare verschleißfreundlich sind, und daß insgesamt eine servicefreundliche Konstruktion geschaffen wird. Des weiteren soll durch die Verwendung einer Exzenterbewegung an den Scharen ein effektiveres Roden, insbesondere weniger Erdreich an den Rüben, und ein verbesserter Antrieb für die Scharhalter erzielt werden.

Gemäß der Erfindung wird dies mit den Merkmalen des Kennzeichens des Anspruches 1 erreicht. Weitere Ausgestaltungen der Erfindung sind Gegenstand der Unteransprüche.

Der Antrieb für die Scharhalter bzw. an deren Enden befestigten Rodeschare ist besonders kompakt und zweckmäßig ausgebildet. Er ermöglicht eine Übertragung einer Antriebskraft auf die Scharhalter bzw. Rodeschare mit phasenversetztem Hub und damit eine oszillierende Bewegung für die beiden Scharhalter bzw. Rodeschare, nämlich eine auf- und abgehende Bewegung sowie eine vorwärts- und rückwärtsgehende Bewegung, und zwar mit phasenversetztem Hub. Dabei wird eine lineare Verschiebebewegung zusammen mit einer oszillierenden Bewegung eines jeden einzelnen Scharstieles auf einer gemeinsamen Welle ausgeführt.

Die Antriebswelle, die sich durchgehend über die gesamte Breite einer mehrreihigen Rübemaschine erstreckt, nimmt Exzentereinrichtungen pro Rübenreihe auf. Die Exzentereinrichtung führt dabei einen phasenversetzten Hub der beiden Scharhalter auf und ist in axialer Richtung frei verschiebbar, so daß die Scharhalter mit den Scharen beim Auftreffen auf ein Hindernis sich in begrenztem Umfang seitlich bewegen können. Die beiden Exzenter einer Exzentereinheit sind als Exzenterhohlwelle ausgebildet, die über Kugelkäfige auf der Antriebswelle sitzt. Aufgrund der Möglichkeit der seitlichen Bewegung der Exzentereinrichtung relativ zu der Antriebswelle ist eine seitliche Verstellung der Scharhalter zusätzlich zu der durch die Exzenterwelle erzielten oszillierenden Bewegung gewährleistet. Die Antriebseinrichtung läuft vorzugsweise in Öl und erhält eine Abdichtung über Faltenbälge.

Gemäß weiterer Ausgestaltung der Erfindung sind die Rodeschare so ausgebildet, daß das am unteren Ende eines Scharhalters befestigte Rodeschar ohne handelsübliche Scharblech, das an dem Rodeschar angeschraubt wird, ausgebildet ist, so daß Scharbrust und Schar eine Einheit ausbilden. Damit wird eine gegenüber herkömmlichen Ausführungen sehr schmale Bauweise erzielt, die eine wesentlich geringere Menge an Erdreich bewegt und damit erheblich verschleißärmer ist. Das Rodeschar ist ferner gelenkig um eine horizontale Achse gegenüber dem Scharhalter schwenkbar ausgebildet, so daß es beim Auftreffen auf ein Hindernis ausweichen kann. Über eine am Rahmen befestigte Federanordnung wird das Rodeschar in die Arbeitsposition vorgespannt, so daß beim Auslenken des Rodeschares der Federkraft entgegengewirkt wird.

Mit dem erfindungsgemäßen Vorschlag wird erreicht, daß der Rodevorgang effektiver und für die Rüben schonender durchgeführt werden kann, daß die Gesamtbauweise sehr übersichtlich, reparatur- und servicefreundlich und mit geringem Gewicht ausgeführt werden kann, und daß ein Minimum an Verschleißteilen und Gelenkpunkten benötigt wird. Insbesondere wird durch die phasenversetzte oszillierende Hubbewegung jedes Rodescharelementes eine besonders zweckmäßige hebende Wirkung auf die Rüben ausgeübt, so daß der Rodevorgang besonders schonend erfolgt.

Nachstehend wird die Erfindung in Verbindung mit der Zeichnung anhand eines Ausführungsbeispieles erläutert. Es zeigt:
- Fig. 1: eine Seitenansicht einer Scharkörpereinheit mit einem Paar von Halterungen und Scharkörpern pro Rübenreihe,
- Fig. 2: eine Frontansicht einer Einheit nach Fig. 1,
- Fig. 3: eine Darstellung entsprechend der nach Fig. 1 mit Verbindung zum Rahmen der Maschine und mit Scharbrust,
- Fig. 4: eine schematische Darstellung der Exzenteranordnung mit Antrieb für die Scharhalter,
- Fig. 5: eine schematische Darstellung einer Scharhalterung mit Rodeschar,
- Fig. 6: eine Gesamt-Schnittdarstellung einer Exzentereinheit mit Faltenbalg,
- Fig. 7: eine Schnittansicht einer Exzenterwelle für den Scharkörper,
- Fig. 8: eine Seitenansicht der Exzenterwelle nach Fig. 7,
- Fig. 9: eine Welle für die Scharkörperlagerung, und
- Fig. 10: eine Seitenansicht der Darstellung nach Fig. 9.

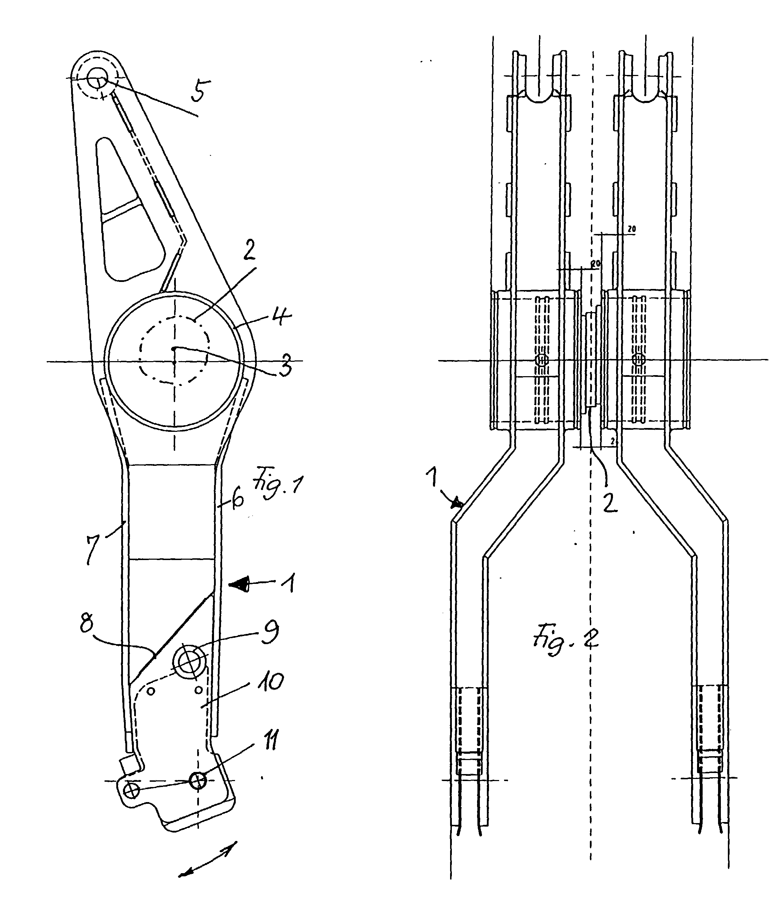

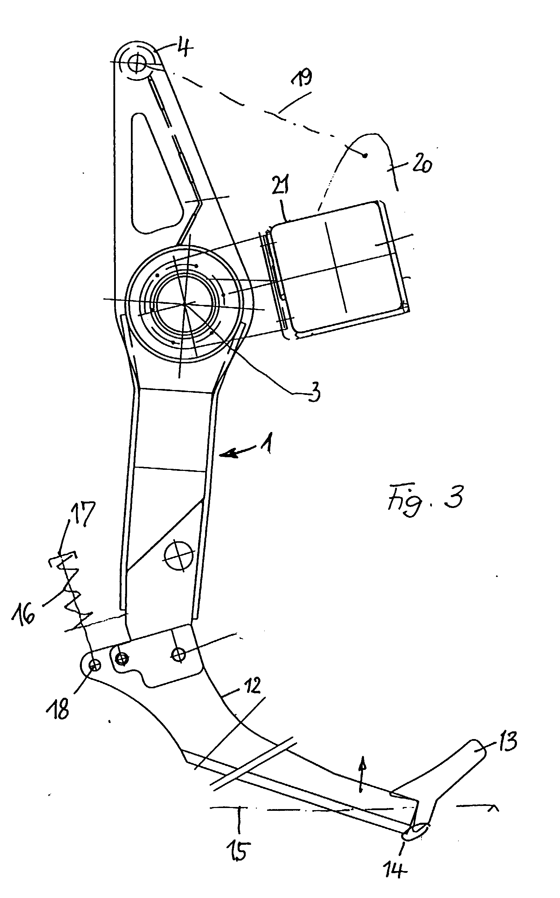

In Fig. 1 ist ein Scharhalter in seitlicher Ansicht dargestellt. Zwei entsprechende Scharhalter bilden, wie in Fig. 2 gezeigt, ein Paar pro Rübenreihe, und es sind auf einer gemeinsamen Welle eine Mehrzahl derartiger Scharhalterpaare angeordnet. Der Scharhalter 1 wird von einer Exzenter-Hohlwelle 2 aufgenommen, die einen Exzenter-Lagerpunkt 3 besitzt und von einem Lagergehäuse 4 umgeben ist. Mit 5 ist eine Lagerung für den Anschluß einer Zugstange dargestellt, mit der der Scharhalter und damit das Rodeschar verstellt werden kann.

Das am Scharhalter befestigte Schar ist drehbar bei 11 gelagert und weist eine Scharbrust 12 auf, an deren Vorderende eine Scharhacke 13 zur Führung der gerodeten Rüben angeordnet ist. Mit 14 ist am unteren Scharbrustende eine die oszillierende Bewegung darstellende Ellipse angedeutet, die sich aufgrund der exzentrischen Lagerung ergibt. 15 deutet die Erdreichoberfläche an. Um die um den Drehpunkt 11 schwenkbare Scharbrust 12 in der Betriebsposition zu halten, ist eine Federanordnung 16 mit einem Ende gehäusefest angebracht und mit dem anderen Ende an einem Punkt 18 der Scharbrust befestigt, so daß bei einer Auslenkung der Scharbrust die Federkraft der Feder 16 überwunden werden muß. Eine Zugstange 19 ist zwischen der Lagerstelle 5 und einem Flansch 20, der an einem Rahmenrohr 21 starr befestigt ist, angebracht.

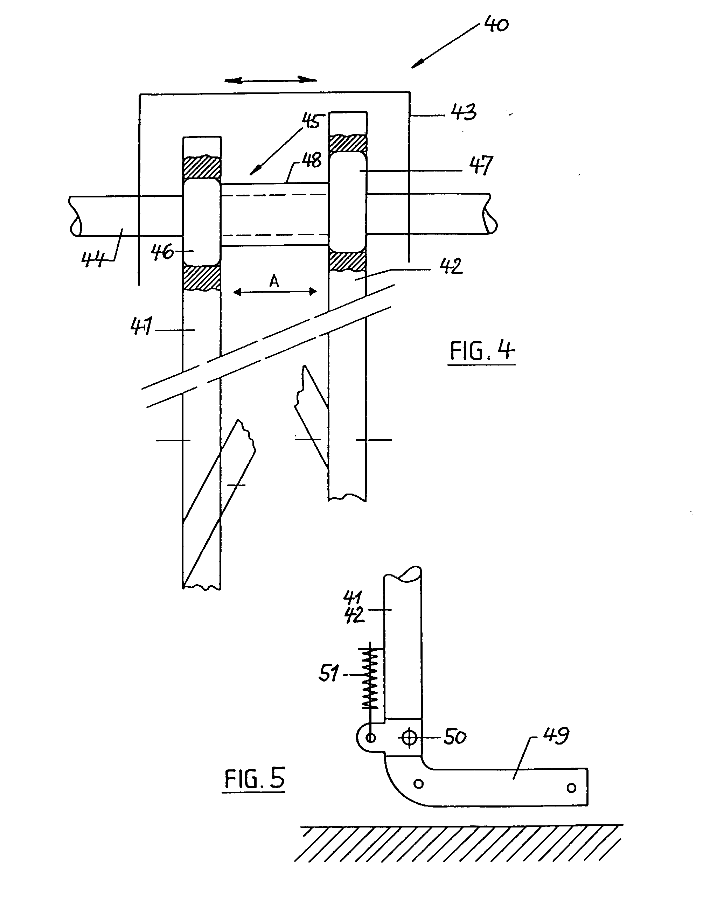

Die Fig. 4 zeigt schematisch den Exzenterantrieb 40 für die Scharhalter 41, 42 und die in Fig. 5 gezeigten, jeweils mit den Scharhaltern befestigten Rodescharen 12 (in Fig. 3).

Der Antrieb 40 ergibt eine oszillierende Bewegung der beiden Scharhalter 41, 42 und der daran befestigten Rodeschare, nämlich eine aufwärts und abwärts sowie eine vorwärts und rückwärts gerichtete Bewegung, wobei diese oszillierende Bewegung für die beiden Scharhalter im Hub phasenverschoben durchgeführt wird.

Der Antrieb 40 weist eine im Rahmen 43 drehbar gelagerte Hauptwelle 44 auf, die sich über die gesamte Maschinenbreite erstreckt und die für alle Einheiten zentral angetrieben wird. Auf der Hauptwelle 44 ist eine Exzenter-Hohlwelle 45 gelagert, die den phasenversetzten Hub für beide Scharhalter ausführt, und die pro Einheit axial (Doppelpfeil) frei beweglich ist, damit die Schare beim Auftreffen auf ein Hindernis seitlich ausweichen können. Die Exzenter-Hohlwelle 45 besteht aus zwei Exzenter-Abschnitten 46 und 47, die auf der Hohlwelle 48 sitzen, die auf der Hauptwelle 44 gelagert ist. Jeder der beiden Exzenter 46, 47 ist mit einem der Scharhalter 41, 42 gekoppelt, und greift z.B. in eine Bohrung eines Scharhalters ein.

Die Exzenter 46 und 47 sind so gegeneinander versetzt bzw. phasenverschoben, daß sie beim Drehen der Hauptwelle 44 eine gegenläufige Bewegung der Scharhalter 41 und 42 ergeben. Aufgrund der axialen Verschiebbarkeit der Exzenteranordnung 45 ist zusätzlich zu der oszillierenden Bewegung der Scharhalter eine seitliche Verschiebung gewährleistet. Der Antrieb 40 kann unabhhängig von der Ausbildung der Vorrichtung zum Roden von Wurzelfrüchten, insbesondere von Zuckerrüben, in vorteilhafter Weise angewendet werden.

Bei der schematischen Darstellung nach Fig. 5 nimmt das untere Ende eines Scharhalters 41 bzw. 42 ein Schar 49 auf, das als einteiliges Rodeschar ausgebildet ist, d.h., daß das übliche Scharblech hierbei entfallen kann, und das Rodeschar ein einziges Bauteil darstellt. Diese Ausgestaltung hat den Vorteil gegenüber herkömmlichen Ausführungen, daß es eine sehr schmale Bauweise ermöglicht, die eine wesentlich geringere Erdbewegung und damit einen wesentlich geringeren Verschleiß am Schar 49 bewirkt, als dies mit herkömmlichen, geteilten Scharen der Fall ist. Das Schar 49 ist bei 50 mit Hilfe eines Gelenkbolzens um eine im wesentliche horizontale Achse schwenkbar mit den Scharhaltern 41, 42 verbunden, so daß das Rodeschar beim Auftreffen auf Steine oder dergl. Hindernisse entgegen der Wirkung der Feder 51 schwenkbar ausweichen kann.

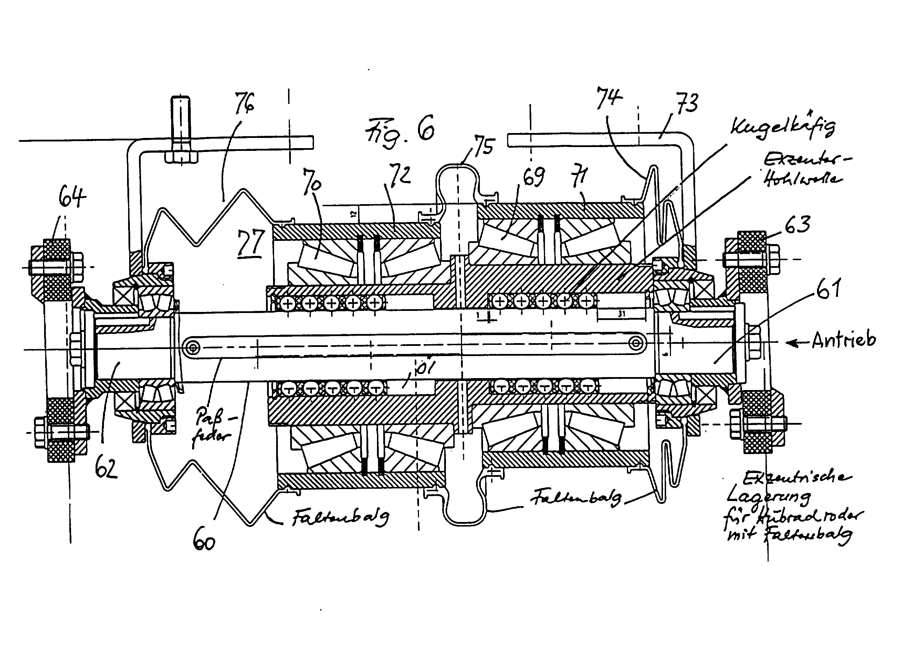

Fig. 6 zeigt den Exzenterantrieb, der in Fig. 4 schematisch dargestellt ist, in einer näher dargestellten Ausführungsform. Die von einem (nicht dargestellten) Zentralantrieb angetriebene Welle 60 für die Scharkörperhalterung ist eine durchgehende Welle durch Wellenkupplungen 61, 62 unterbrochen, die in Flanschlagern 65, 66 aufgenommen sind. Auf der Welle 60 sitzen Kugelkäfige 65, 66 auf, die die Exzenter-Hohlwellenabschnitte 67, 68 aufnehmen, welche ihrerseits Gehäuselager 69, 70 aufnehmen, die durch Gehäuseabschnitte 71, 72 abgeschlossen sind. Die gesamte Antriebsvorrichtung ist innerhalb eines Rahmengehäuses 73 angeordnet. Die gesamte Hohlwellenanordnung ist über die Kugelkäfige auf der Welle 60 in Axialrichtung hin-und herbeweglich, so daß die von der Exzenter-Hohlwelle aufgenommenen Scharstiele mit den Rodescharen eine seitliche Bewegung ausführen können. Die gesamte Antriebseinheit ist in Öl 77 gelagert und nach außen durch Faltenbalge 74, 75, 76 abgeschichtet, die eine seitliche Bewegung der Antriebseinheit aufnehmen.

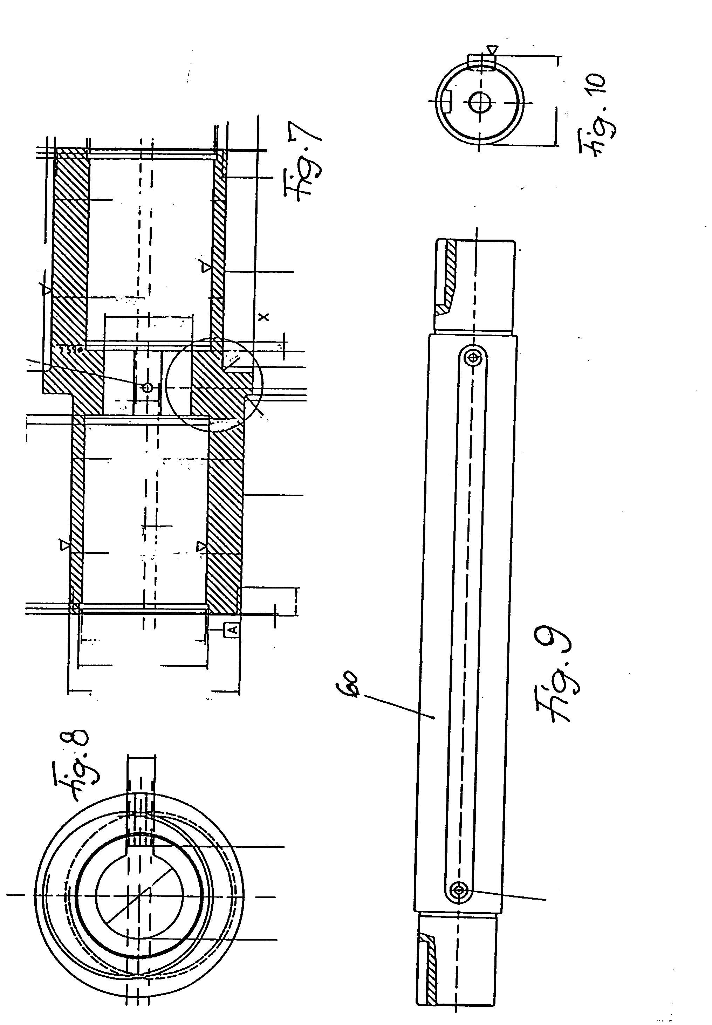

In den Figuren 7 und 8 ist die Exzenter-Hohlwelle sowohl in Schnittansicht als in Stirnansicht getrennt dargestellt, die Figuren 9 und 10 zeigen die durchgehende Welle 60.

### Bezugszeichenliste

- 1: Scharhalter
- 2: Exzenter-Hohlwelle
- 3: Exzenter-Lagerpunkt
- 4: Lagergehäuse
- 5: Lagerstelle
- 11: Schardrehpunkt
- 12: Scharbrust
- 13: Scharhacke
- 14: oszillierende Bewegung der Scharbrust
- 15: Erdreichoberfläche
- 16: Federanordnung
- 18: Befestigungspunkt
- 19: Zugstange
- 20: Flansch
- 21: Rahmenrohr
- 40: Exzenterantrieb
- 41, 42: Scharhalter
- 43: Rahmen
- 44: Hauptwelle
- 45: Exzenter-Hohlwelle
- 46, 47: Exzenter-Abschnitte
- 48: Hohlwelle
- 49: Schar
- 50: Gelenkbolzen
- 51: Feder
- 60: Welle Scharkörperhalterung
- 61, 62: Wellenkupplungen
- 65, 66: Flanschlager, Kugelkäfige
- 67, 68: Exzenter-Hohlwellenabschnitt
- 69, 70: Gehäuselager
- 71, 72: Gehäuseabschnitte
- 73: Rahmengehäuse
- 74, 75, 76: Faltenbalge
- 77: Öl

## Patentansprüche

1. Vorrichtung zum Roden von Wurzelfrüchten, insbesondere Zuckerrüben, mit mindestens einem Rodewerkzeug, das aus wenigstens zwei die Wurzelfrüchte im Erdreich lockernden, anhebenden und fördernden Rodescharen (49), die jeweils an einem Scharhalter (1; 41, 42) befestigt sind, sowie aus einem Antrieb mit einer angetriebenen Welle und einer auf der Welle angeordneten Exzenteranordnung (2, 3; 45, 46, 47) zur Erzeugung einer oszillierenden Bewegung der Scharhalter und der an diesen befestigten Rodescharen besteht, **dadurch gekennzeichnet**, daß
a) zur Erzeugung einer individuellen oszillierenden Bewegung an den wenigstens zwei Rodescharen die Exzenteranordnung (2, 3; 45, 46, 47) wenigstens zwei Exzenter (46, 47) zur Ansteuerung jeweils eines Scharhalters (1; 41, 42) aufweist,
b) die Exzenteranordnung in Achsrichtung verschieb- und auslenkbar auf der Welle (44) angeordnet ist, und
c) axiale Verschiebung und oxzillierende Bewegung eines Scharhalters auf einer gemeinsamen Welle (44) erfolgen.

2. Vorrichtung nach Anspruch 1, dadurch gekennzeichnet, daß auf der
Scharhalterwelle (44) eine Exzenter-Hohlwelle (45) angeordnet ist, die aus zwei entgegengesetzt zueinander exzentrisch angeordneten Abschnitten (46, 47) besteht, deren jeder einen Scharhalter aufnimmt.

3. Vorrichtung nach Anspruch 1 oder 2, dadurch gekennzeichnet, daß die Exzenter-Hohlwellenabschnitte (45; 46, 47) auf Kugelkäfigen (65, 66) laufend angeordnet sind.

4. Vorrichtung nach einem der Ansprüche 1 - 3, dadurch gekennzeichnet, daß die Exzenterbewegung, die auf die Rodeschare ausgeübt wird, im Hub phasenversetzt läuft.

5. Vorrichtung nach einem der Ansprüche 1 - 4, dadurch gekennzeichnet, daß die Exzenter-Hohlwelle (45) in getrennten, durch Faltenbälge (74, 75, 76) miteinander verbundenen und abgedichteten Gehäuseabschnitten (71, 72) angeordnet ist, die über Rollenlageranordnungen auf der Exzenter-Hohlwelle laufen.

6. Vorrichtung nach einem der Ansprüche 1 - 5, dadurch gekennzeichnet, daß die Exzenteranordnung (45, 46, 47) auf der Scharkörperwelle (Exzenterwelle 44) axial hin- und herverschiebbar angeordnet ist, und daß die Faltenbälge (74, 75, 76) zwischen den Gehäuseabschnitten und den Außenlagern abdichtend vorgesehen sind.

7. Vorrichtung nach einem der Ansprüche 1 - 6, dadurch gekennzeichnet, daß die Exzenter-Hohlwelle (45) Oszillationsbewegungen und lineare axiale Bewegungen ausführt.

8. Vorrichtung zum Roden von Wurzelfrüchten insbesondere Zuckerrüben, mit mindestens einem Rodewerkzeug, das aus wenigstens zwei die Wurzelfrüchte im Erdreich lockernden, anhebenden und fördernden Rodescharen (49), die jeweils an einem Scharhalter (1; 41, 42) befestigt sind, sowie aus einem Antrieb mit einer angetriebenen Welle (44) und auf der Welle angeordneten Exzenteranordnung (45, 46, 47) zur Erzeugung einer oszillierenden Bewegung der Scharhalter und der an diesen befestigten Rodescharen besteht, dadurch gekennzeichnet, daß jeweils ein Rodeschar (49) und eine Scharbrust (12) miteinander als Einheit, ohne Verwendung von Scharblechen, ausgebildet ist.

9. Vorrichtung nach Anspruch 8, dadurch gekennzeichnet, daß die Scharbrust (12) am Scharhalter (1) und relativ zum Scharhalter schwenkbar befestigt ist, und daß die Scharbrust durch Federkraft (16) am Scharhalter (1) festgelegt ist.
